(19) Europäisches Patentamt
European Patent Office
Office européen des brevets

(11)  EP 2 206 031 B1

(12)  EUROPÄISCHE PATENTSCHRIFT

(45) Veröffentlichungstag und Bekanntmachung des
Hinweises auf die Patenterteilung:
**06.04.2011 Patentblatt 2011/14**

(51) Int Cl.:
*G05D 3/20* (2006.01)          *B21B 37/62* (2006.01)
*F15B 15/00* (2006.01)

(21) Anmeldenummer: **08803773.4**

(22) Anmeldetag: **05.09.2008**

(86) Internationale Anmeldenummer:
**PCT/EP2008/061804**

(87) Internationale Veröffentlichungsnummer:
**WO 2009/056378 (07.05.2009 Gazette 2009/19)**

(54) **REGELEINRICHTUNG ZUM POSITIONSREGELN EINER HYDRAULIKZYLINDEREINHEIT, MIT LINEARISIERUNGSEINHEIT**

CONTROL DEVICE FOR THE POSITION CONTROL OF A HYDRAULIC CYLINDER UNIT, COMPRISING A LINEARIZATION UNIT

DISPOSITIF DE RÉGULATION SERVANT À LA RÉGULATION DE POSITION D'UN ENSEMBLE VÉRIN HYDRAULIQUE ET COMPRENANT UNE UNITÉ DE LINÉARISATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.10.2007 DE 102007051857**

(43) Veröffentlichungstag der Anmeldung:
**14.07.2010 Patentblatt 2010/28**

(73) Patentinhaber: **Siemens Aktiengesellschaft**
**80333 München (DE)**

(72) Erfinder:
• **TAUTZ, Wilfried**
**91301 Forchheim (DE)**
• **WOHLD, Dietrich**
**91462 Rauschenberg (DE)**

(56) Entgegenhaltungen:
**EP-A- 0 557 541    DE-A1-102007 003 243**

**Beschreibung**

Die vorliegende Erfindung geht aus von einer Regeleinrichtung zum Positionsregeln einer Hydraulikzylindereinheit, wobei die Regeleinrichtung einen Regler aufweist, der eingangsseitig eine Sollstellung eines Kolbens der Hydraulikzylindereinheit und eine Iststellung des Kolbens entgegen nimmt, anhand der Differenz von Sollstellung und Iststellung eine Stellgröße für eine Ventilsteuereinheit der Hydraulikzylindereinheit ermittelt und die ermittelte Stellgröße an die Ventilsteuereinheit ausgibt, so dass der Kolben mit einer Verstellgeschwindigkeit verstellt wird.

Eine derartige Regeleinrichtung ist beispielsweise aus der EP 0 557 541 A1 bekannt.

Hydraulikzylindereinheiten zeigen ein Regelverhalten, das stark vom Betriebspunkt der Hydraulikzylindereinheit abhängig ist. Ein Positionsregler, der für einen bestimmten Betriebspunkt optimiert wurde, arbeitet in anderen Betriebspunkten weniger gut oder schlecht.

Zum Verbessern des Regelverhaltens ist im Stand der Technik bekannt, als Regelcharakteristik des Reglers eine so genannte Schmetterlingskurve vorzusehen. Die Schmetterlingskurve deckt jedoch nicht den gesamten Raum möglicher Betriebspunkte ab und arbeitet daher nicht in jedem Betriebszustand optimal.

Weiterhin ist es für Positionsregler für Hydraulikzylindereinheiten bekannt, für die Sollstellung und die Iststellung unabhängig voneinander je eine nichtlineare Transformation vorzunehmen und zusätzlich eine Teillinearisierung des Positionsreglers vorzunehmen. Diese vorgehensweise ist sehr aufwändig.

Die Aufgabe der vorliegenden Erfindung besteht darin, Möglichkeiten zu schaffen, mittels derer auf möglichst einfache Weise ein optimales Regelverhalten erreicht werden kann.

Die Aufgabe wird durch eine Regeleinrichtung mit den Merkmalen des Anspruchs 1 und des Anspruchs 3, ein Softwaremodul mit den Merkmalen des Anspruchs 8 und einen Datenträger mit den Merkmalen des Anspruchs 9 gelöst. Die Ansprüche 2 und 4 bis 7 betreffen vorteilhafte Ausgestaltungen der Regeleinrichtung. Anspruch 10 nennt eine bevorzugte Verwendung der erfindungsgemäßen Regeleinrichtung.

Erfindungsgemäß ermittelt der Regler eine vorläufige Stellgröße. Weiterhin ist dem Regler eine Linearisierungseinheit nachgeordnet, welche die vorläufige Stellgröße mit einem Linearisierungsfaktor multipliziert und die mit dem Linearisierungsfaktor multiplizierte vorläufige Stellgröße als endgültige Stellgröße an die Ventilsteuereinheit ausgibt. Die Linearisierungseinheit bestimmt den Linearisierungsfaktor dynamisch als Funktion der Iststellung des Kolbens und beidseitig des Kolbens sowie zufluss- und abflussseitig der Ventilsteuereinheit herrschender Arbeitsdrücke. Die Linearisierungseinheit bestimmt den Linearisierungsfaktor derart, dass ein Verhältnis der Verstellgeschwindigkeit zur Differenz von Sollstellung und Iststellung unabhängig von der Iststellung des Kolbens und den Arbeitsbrücken ist. Bevorzugt ist hierbei der Regler als P-Regler ausgebildet.

In dem Spezialfall, dass der Regler als P-Regler ausgebildet ist, kann die Reihenfolge von Regler und Linearisierungseinheit vertauscht werden. In diesem Fall multipliziert die Linearisierungseinheit die Differenz von Sollstellung und Iststellung mit dem Linearisierungsfaktor und führt die multiplizierte Differenz dem Regler als dessen Eingangsgröße zu. Die Art und Weise der Ermittlung des Linearisierungsfaktors bleibt jedoch unverändert.

In aller Regel zieht die Linearisierungseinheit zur Bestimmung des Linearisierungsfaktors als weitere Daten Leistungsdaten der Ventilsteuereinheit, beidseitig des Kolbens wirksame Arbeitsflächen und beidseitig des Kolbens minimal mögliche wirksame Volumina heran. Die weiteren Daten können hierbei der Linearisierungseinheit fest vorgegeben sein. Vorzugsweise jedoch nimmt die Linearisierungseinheit die weiteren Daten zumindest teilweise als Parameter entgegen.

Vorzugsweise ermittelt die Linearisierungseinheit den Linearisierungsfaktor gemäß der Beziehung

$$F = K \cdot \frac{\dfrac{AKA}{hA} + \dfrac{AKB}{hB}}{\sqrt{\dfrac{pP - pA}{pN} \cdot \dfrac{QNA}{hA}} + \sqrt{\dfrac{pB - pT}{pN} \cdot \dfrac{QNB}{hB}}}$$

Die in obiger Gleichung verwendeten Größen haben hierbei folgende Bedeutung:

- F ist der Linearisierungsfaktor,
- K ist ein frei wählbarer, konstanter Skalierungsfaktor,
- AKA ist die dem sich vergrößernden Arbeitsvolumen zugewandte Arbeitsfläche des Kolbens,
- AKB ist die dem sich verkleinernden Arbeitsvolumen zugewandte Arbeitsfläche des Kolbens,
- pA ist der Arbeitsdruck, der auf die dem sich vergrößernden Arbeitsvolumen zugewandte Arbeitsfläche des Kolbens wirkt,

- pB ist der Arbeitsdruck, der auf die dem sich verkleinernden Arbeitsvolumen zugewandte Arbeitsfläche des Kolbens wirkt,
- pP ist der zuflussseitig der Ventilsteuereinheit anstehende Arbeitsdruck,
- pT ist der abflussseitig der Ventilsteuereinheit anstehende Arbeitsdruck,
- pN ist ein Nominaldruck der Ventilsteuereinheit,
- QNA ist ein Nennvolumenstrom, der in das sich vergrößernde Arbeitsvolumen strömt, wenn eine Differenz zwischen dem zuflussseitig der Ventilsteuereinheit anstehenden Arbeitsdruck und dem im sich vergrößernden Arbeitsvolumen anstehenden Arbeitsdruck gleich dem Nominaldruck ist,
- QNB ist ein Nennvolumenstrom, der aus dem sich verkleinernden Arbeitsvolumen strömt, wenn eine Differenz zwischen dem im sich verkleinernden Arbeitsvolumen anstehenden Arbeitsdruck und dem abflussseitig der Ventilsteuereinheit anstehenden Arbeitsdruck gleich dem Nominaldruck ist,
- hA ist der Quotient zwischen dem sich vergrößernden Arbeitsvolumen und der diesem Arbeitsvolumen zugewandten Arbeitsfläche, wobei das sich vergrößernde Arbeitsvolumen anhand der Iststellung des Kolbens und des für diese Seite des Kolbens minimal möglichen wirksamen Volumens ermittelt wird, und
- hB ist der Quotient zwischen dem sich verkleinernden Arbeitsvolumen und der dem sich verkleinernden Arbeitsvolumen zugewandten Arbeitsfläche, wobei das sich verkleinernde Arbeitsvolumen anhand der Iststellung des Kolbens und des für diese Seite des Kolbens minimal möglichen wirksamen Volumens ermittelt wird.

Die Regeleinrichtung kann als Hardwarestruktur ausgebildet sein. Vorzugsweise ist sie jedoch als softwareprogrammierbare Regeleinrichtung ausgebildet und mit einem Softwaremodul programmiert, so dass sie auf Grund der Programmierung mit dem Softwaremodul erfindungsgemäß ausgebildet ist.

Das Softwaremodul umfasst Maschinencode, dessen Abarbeitung durch eine an eine Hydraulikzylindereinheit angebundene softwareprogrammierbare Regeleinrichtung bewirkt, dass die Regeleinrichtung wie obenstehend beschrieben ausgebildet wird. Das Softwaremodul kann in maschinenlesbarer Form auf einem Datenträger gespeichert sein.

Prinzipiell ist die erfindungsgemäße Regeleinrichtung universell verwendbar. Vorzugsweise jedoch wird sie zur Anstellungsregelung eines Walzgerüsts verwendet.

Weitere Vorteile und Einzelheiten ergeben sich aus der nachfolgenden Beschreibung von Ausführungsbeispielen in Verbindung mit den Zeichnungen. Es zeigen in Prinzipdarstellung:

FIG 1    ein Blockschaltbild einer Regeleinrichtung und einer Hydraulikzylindereinheit,
FIG 2    eine erste Ausführungsform der Regeleinrich- tung,
FIG 3    eine zweite Ausführungsform der Regeleinrich- tung,
FIG 4    eine Ermittlungseinrichtung einer Linearisie- rungseinheit und
FIG 5    eine Anstellungseinrichtung für eine Walze ei- nes Walzgerüsts.

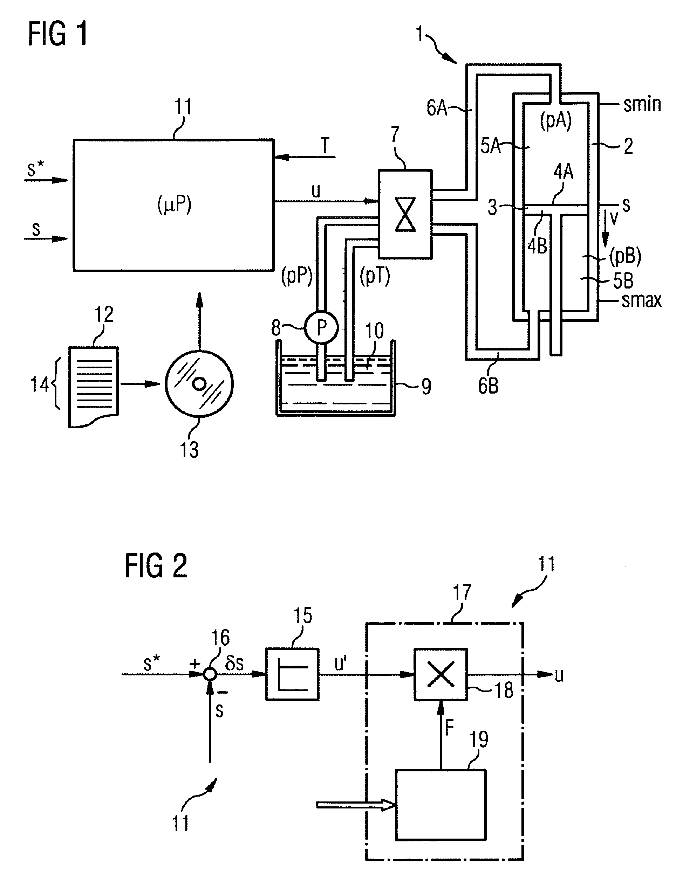

Gemäß FIG 1 weist eine Hydraulikzylindereinheit 1 einen Hydraulikzylinder 2 auf, in dem ein Kolben 3 beweglich gelagert ist. Der Kolben 3 ist innerhalb des Hydraulikzylinders 1 zwischen einer Minimalstellung smin und einer Maximalstellung smax bewegbar. Er befindet sich also zu jedem Zeitpunkt bei einer Iststellung s, die zwischen der Minimalstellung smin und der Maximalstellung smax liegt.

Der Kolben 3 weist eine erste Arbeitsfläche 4A und eine zweite Arbeitsfläche 4B auf. Jede Arbeitsfläche 4A, 4B ist einem entsprechenden Arbeitsvolumen 5A, 5B zugewandt.

Die Arbeitsvolumina 5A, 5B sind über Hydraulikpfade 6A, 6B und eine Ventilsteuereinheit 7 mit einer Hydraulikpumpe 8 und einem Hydraulikreservoir 9 hydraulisch verbunden. Die Hydraulikpfade 6A, 6B erstrecken sich hierbei von dem jeweiligen Arbeitsvolumen 5A, 5B bis zur Ventilsteuereinheit 7.

Wenn der Kolben 3 sich in seiner Minimalstellung smin befindet, befindet sich im Hydraulikpfad 6A ein bestimmtes Volumen einer Hydraulikflüssigkeit 10. Dieses Volumen ist die minimale Menge an Hydraulikflüssigkeit 10, die sich zwischen der Ventilsteuereinheit 7 und der Arbeitsfläche 4A des Kolbens 3 befindet. Diese Menge an Hydraulikflüssigkeit 10 ist das minimal mögliche wirksame Volumen für das Arbeitsvolumen 5A. Es wird nachfolgend mit dem Bezugszeichen VminA bezeichnet.

In analoger Weise befindet sich im Hydraulikpfad 6B eine bestimmte Menge an Hydraulikflüssigkeit 10, wenn der Kolben 3 sich in seiner Maximalstellung smax befindet. Diese Menge an Hydraulikflüssigkeit 10 stellt ein minimal mögliches wirksames Volumen für das Arbeitsvolumen 5B dar. Dieses Minimalvolumen wird nachfolgend mit dem Bezugszeichen VminB bezeichnet.

Wenn der Kolben 3 sich bei einer beliebigen Iststellung s befindet, weist das Arbeitsvolumen 5A einen Volumenwert VA auf, der sich zu

$$VA = VminA + AKA (s - smin)$$

ergibt. Mit dem Bezugszeichen AKA ist hierbei der Flächenwert der dem Arbeitsvolumen 5A zugewandten Arbeitsfläche 4A des Kolbens 3 bezeichnet.

Es ist möglich, das wirksame Volumen VA durch den Flächenwert AKA zu dividieren. Der Quotient

$$hA = VA/AKA$$

entspricht einer effektiven Höhe einer Säule der Hydraulikflüssigkeit 10 über dem Kolben 3.

In analoger Weise können anhand des minimal möglichen wirksamen Volumens VminB, des Flächenwerts AKB der dem Arbeitsvolumen 5B zugewandten Arbeitsfläche 4B, der Iststellung s und der Maximalstellung smax gemäß den Beziehungen

$$VB = VminB + AKB (smax-s)$$

und

$$hB = VB/AKB$$

korrespondierende Werte VB und hB für die zweite Arbeitsfläche 4B bzw. das zweite Arbeitsvolumen 5B ermittelt werden.

Im Arbeitsvolumen 5A herrscht ein erster Arbeitsdruck pA, im zweiten Arbeitsvolumen 5B ein zweiter Arbeitsdruck pB. Über die Hydraulikpumpe 8 wird die Hydraulikflüssigkeit 10 mit einem Pumpendruck pP beaufschlagt. Im Hydraulikreservoir 9 herrscht ein Tankdruck pT. Der Pumpendruck pP und der Tankdruck pT entsprechen einem zufluss- und einem abflussseitig der Ventilsteuereinheit 7 herrschenden Arbeitsdruck.

Die Ventilsteuereinheit 7 ist im vorliegenden Fall als Vierwegeventil ausgebildet. Mittels eines Vierwegeventils ist jedes der beiden Arbeitsvolumina 5A, 5B alternativ mit dem Pumpendruck pP oder mit dem Tankdruck pT beaufschlagbar. Alternativ könnte die Ventilsteuereinheit 7 jedoch auch als Zweiwegeventil ausgebildet sein. In diesem Fall würde eines der beiden Arbeitsvolumina 5A, 5B mit einem konstanten Druck beaufschlagt werden, beispielsweise mit der Hälfte des Pumpendrucks pP. Das andere der Arbeitsvolumina 5A, 5B kann in diesem Fall alternativ mit dem Pumpendruck pP oder dem Tankdruck pT beaufschlagt werden.

Die Ventilsteuereinheit 7 und mit ihr die gesamte Hydraulikzylindereinheit 1 wird mittels einer Regeleinrichtung 11 geregelt. Der Kolben 3 wird hierbei positionsgeregelt. Die Regeleinrichtung 11 ist vorzugsweise entsprechend FIG 1 als softwareprogrammierbare Regeleinrichtung 11 ausgebildet. Die Regeleinrichtung 11 wird daher mittels eines Softwaremoduls 12 programmiert. Das Softwaremodul 12 kann der Regeleinrichtung 11 beispielsweise mittels eines Datenträgers 13 zugeführt werden, auf dem das Softwaremodul 12 in maschinenlesbarer Form gespeichert ist. Als Datenträger 13 kommt hierbei prinzipiell ein beliebiger Datenträger in Frage. Dargestellt ist (rein beispielhaft) in FIG 1 eine CD-ROM 13.

Das Softwaremodul 12 umfasst Maschinencode 14, der von der Regeleinrichtung 11 abarbeitbar ist. Das Abarbeiten des Maschinencodes 14 durch die Regeleinrichtung 11 bewirkt, dass die Regeleinrichtung 11 die Hydraulikzylindereinheit 1 so regelt, wie dies nachfolgend näher erläutert wird. Die Programmierung der Regeleinrichtung 11 mit dem Softwaremodul 12 bewirkt die entsprechende Ausbildung der Regeleinrichtung 11.

Der Regeleinrichtung 11 werden gemäß FIG 1 zunächst eine Sollstellung s* des Kolbens 3 und die Iststellung s des Kolbens 3 zugeführt. Die Regeleinrichtung 11 ermittelt daraufhin in noch zu erläuternder Weise eine Stellgröße u für die Ventilsteuereinheit 7 und gibt die Stellgröße u an die Ventilsteuereinheit 7 aus. Die Regeleinrichtung 11 führt dadurch die Positionsregelung der Hydraulikzylindereinheit 1 (genauer: des Kolbens 3) durch.

Die Regeleinrichtung 11 ist vorzugsweise entsprechend FIG 2 ausgebildet. Gemäß FIG 2 weist die Regeleinrichtung 11 einen Regler 15 auf, der eingangsseitig die Sollstellung s* und die Iststellung s entgegennimmt. In einem Knotenpunkt 16 wird die Differenz δs von Sollstellung s* und Iststellung s gebildet. Diese Differenz wird nachfolgend als Regeldifferenz δs bezeichnet.

Die Regeldifferenz δs wird dem Regler 15 zugeführt, der anhand der Regeldifferenz δs eine vorläufige Stellgröße u' für die Ventilsteuereinheit 7 ermittelt. Der Regler 15 ist hierbei entsprechend FIG 2 vorzugsweise als P-Regler ausgebildet.

Dem Regler ist eine Linearisierungseinheit 17 nachgeordnet. Die Linearisierungseinheit 17 weist hierbei einen Multiplizierer 18 und eine Ermittlungseinrichtung 19 auf. Die Ermittlungseinrichtung 19 bestimmt in noch zu erläuternder Weise einen Linearisierungsfaktor F und gibt den Linearisierungsfaktor F an den Multiplizierer 18 aus. Der Multiplizierer 18 nimmt weiterhin vom Regler 15 die vorläufige Stellgröße u' entgegen und multipliziert die vorläufige Stellgröße u' mit dem Linearisierungsfaktor F. Die Linearisierungseinheit 17 ermittelt auf diese Weise die endgültige Stellgröße u, welche an die Ventilsteuereinheit 7 ausgegeben wird.

Die Ventilsteuereinheit 7 stellt sich entsprechend der an sie übermittelten Stellgröße u ein. Dadurch wird bewirkt, dass der Kolben 3 mit einer Verstellgeschwindigkeit v verschoben bzw. verstellt wird.

Bei der Ausgestaltung gemäß FIG 2 kann der Regler 15 prinzipiell ein beliebiger Regler sein. Eine Ausgestaltung des Reglers 15 als P-Regler ist jedoch in der Regel ausreichend und auch bevorzugt.

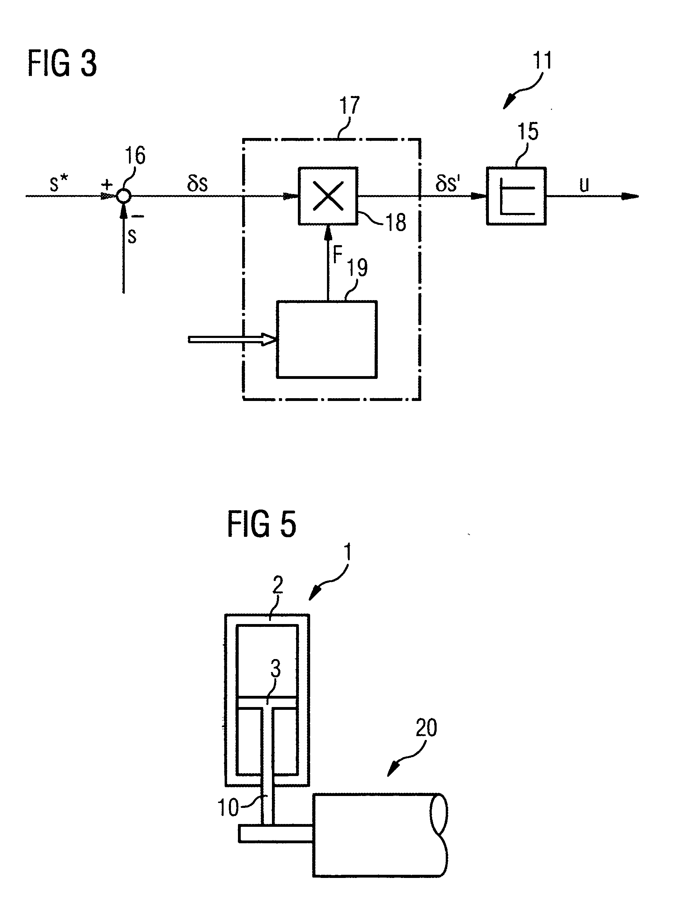

Alternativ zu der Ausgestaltung gemäß FIG 2 ist es gemäß FIG 3 möglich, die Reihenfolge von Regler 15 und Linearisierungseinheit 17 zu vertauschen. In diesem Fall ist die Ausgestaltung des Reglers 15 als P-Regler zwingend. Im Übrigen ist die Wirkungsweise der Ausgestaltung gemäß FIG 3 völlig analog zu der Ausgestaltung gemäß FIG 2. Von Detailerläuterungen zu FIG 3 kann daher abgesehen werden.

Die Ermittlungseinrichtung 19 der Linearisierungseinheit 17 bestimmt den Linearisierungsfaktor F dynamisch als Funktion der Iststellung s des Kolbens 3, der beidseitig des Kolbens 3 herrschenden Arbeitsdrücke pA, pB sowie der zufluss- und abflussseitig der Ventilsteuereinheit 7 herrschenden Arbeitsdrücke pP, pT. Die Ermittlungseinrichtung 19 bestimmt den Linearisierungsfaktor F hierbei derart, dass ein Verhältnis der Verstellgeschwindigkeit v zur Differenz $\delta s$ von Sollstellung s* und Iststellung s unabhängig von der Iststellung s und den Arbeitsdrücken pA, pB, pP, pT ist.

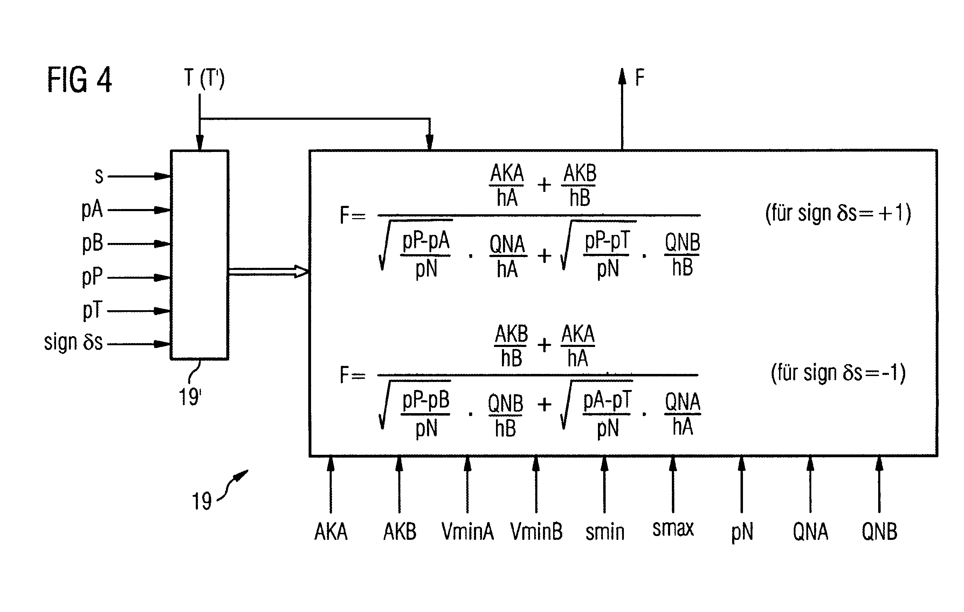

Die Wirkungsweise der Ermittlungseinrichtung 19 wird nachfolgend in Verbindung mit FIG 4 detaillierter erläutert.

Die Regeleinrichtung 11 ist üblicherweise mit einem Arbeitstakt T getaktet. Mit der Frequenz des Arbeitstaktes T nimmt die Regeleinrichtung 11 jeweils eine neue Sollstellung s* und eine neue Iststellung s entgegen, ermittelt die Stellgröße u und gibt die Stellgröße u an die Ventilsteuereinheit 7 aus.

Ebenfalls mit dem Arbeitstakt T, ausnahmsweise auch mit einem kleineren Hilfstakt T' (also einem Takt T', der eine kleinere Frequenz aufweist als der Arbeitstakt T) wird der Ermittlungseinrichtung 19 jeweils ein neuer Wert für die Iststellung s und die Arbeitsdrücke pA, pB zugeführt. Weiterhin wird der Ermittlungseinrichtung 19 das Vorzeichen der Regeldifferenz $\delta s$ zugeführt. Das taktweise Zuführen dieser Größen s, pA, pB, $\delta s$ ist hierbei in FIG 4 dadurch angedeutet, dass der Ermittlungseinrichtung 19 ein Latch 19' vorgeordnet ist, das mit dem Arbeitstakt T (bzw. dem Hilfstakt T') getaktet ist.

Der Pumpendruck pP und der Tankdruck pT sind in der Regel konstant. Es ist daher möglich, diese beiden Drücke pP, pT der Ermittlungseinrichtung 19 einmalig (d. h. vorab und damit als Parameter) zuzuführen. Alternativ ist jedoch ebenfalls möglich, den zuflussseitigen Arbeitsdruck pP und den abflussseitigen Arbeitsdruck pT der Ermittlungseinrichtung 19 getaktet und damit als Variable zuzuführen.

In der Regel benötigt die Ermittlungseinrichtung 19 zur exakten Berechnung des Linearisierungsfaktors F weitere Daten. Die weiteren Daten umfassen in der Regel Leistungsdaten pN, QNA, QNB der Ventilsteuereinheit 7, die beidseitig des Kolbens 3 wirksame Arbeitsflächen AKA, AKB sowie die beidseits des Kolbens minimal möglichen wirksamen Volumina VminA, VminB. Diese Werte können der Ermittlungseinrichtung 19 fest vorgegeben sein, beispielsweise durch das Softwaremodul 12. Alternativ können die weiteren Daten - zumindest teilweise - der Ermittlungseinrichtung 19 nach der Programmierung der Regeleinrichtung 11 als Parameter (d. h. im Rahmen der Inbetriebsetzung der Regeleinrichtung 11) vorgegeben werden, die während des Betriebs der Regeleinrichtung 11 unverändert beibehalten werden.

Der Linearisierungsfaktor F ist abhängig von der Bewegungsrichtung des Kolbens 3, das heißt von der Richtung, in die der Kolben 3 verschoben werden soll. Der Linearisierungsfaktor F ist damit abhängig vom Vorzeichen der Regeldifferenz $\delta s$. Nachfolgend wird angenommen, dass der Kolben 3 in die positive Richtung verschoben werden soll, also in Richtung auf die Maximalstellung smax zu. In diesem Fall bestimmt die Ermittlungseinrichtung 19 den Linearisierungsfaktor F vorzugsweise zu

$$F = K \cdot \frac{\dfrac{AKA}{hA} + \dfrac{AKB}{hB}}{\sqrt{\dfrac{pP - pA}{pN} \cdot \dfrac{QNA}{hA}} + \sqrt{\dfrac{pB - pT}{pN} \cdot \dfrac{QNB}{hB}}}$$

Die in obiger Formel verwendeten Größen sind - mit Ausnahme der Leistungsdaten pN, QNA, QNB der Ventilsteuereinheit 7 bereits definiert. Die Leistungsdaten pN, QNA und QNB der Ventilsteuereinheit 7 haben folgende Bedeutung:

- pN ist ein (prinzipiell beliebiger) Nominaldruck. Er entspricht einem Referenzdruck, auf den die Größen QNA, QNB normiert sind.
- QNA ist ein Nennvolumenstrom, der in das Arbeitsvolumen 5A strömt, wenn eine Differenz zwischen dem Pumpendruck pP und dem im Arbeitsvolumen 5A herrschenden Arbeitsdruck pA gleich dem Nominaldruck pN ist.
- QNB ist ein Nennvolumenstrom, der aus dem Arbeitsvolumen 5B strömt, wenn eine Differenz zwischen dem Arbeitsdruck pB und dem Tankdruck pT gleich dem Nominaldruck pN ist.

Wie bereits erwähnt, ist der Linearisierungsfaktor F richtungsabhängig. In dem Fall, das der Kolben 3 in die umgekehrte Richtung verschoben werden soll, ergibt sich der Linearisierungsfaktor F zu

$$F = K \cdot \frac{\dfrac{AKB}{hB} + \dfrac{AKA}{hA}}{\sqrt{\dfrac{pP - pB}{pN} \cdot \dfrac{QNB}{hB}} + \sqrt{\dfrac{pA - pT}{pN} \cdot \dfrac{QNA}{hA}}}$$

In Anspruch 6 ist dennoch - korrekterweise - nur eine einzige Formel angegeben, da Anspruch 6 richtungsabhängig formuliert ist. Die Ermittlungseinrichtung 19 hingegen berechnet vorzugsweise beide Werte und wählt anhand des Vorzeichens der Regeldifferenz δs den korrekten Linearisierungsfaktor F aus.

Die erfindungsgemäße Anordnung aus Hydraulikzylindereinheit 1 und Regeleinrichtung 11 ist prinzipiell beliebig einsetzbar. Vorzugsweise wird sie jedoch gemäß FIG 5 zur Anstellungsregelung eines in FIG 5 schematisch angedeuteten Walzgerüsts 20 verwendet.

Die vorliegende Erfindung weist viele Vorteile auf. Insbesondere erfolgt in jedem Betriebspunkt der Hydraulikzylindereinheit 1 ein optimaler Betrieb der Regeleinrichtung 11. Die Regelung ist vollständig linearisiert. Transformationen (vergleiche nicht lineares HGC) sind nicht erforderlich. Weiterhin ist - ebenfalls im Gegensatz zum nicht linearen HGC - auf einfache Weise eine Einbindung der vorliegenden Erfindung in bereits vorhandene Regelsysteme möglich, da bereits vorhandene überlagerte Regelstrukturen (vermaschte Regelungen und dergleichen) nicht verändert werden müssen. Es ergibt sich damit eine vereinfachte Inbetriebsetzung und Wartbarkeit der Regeleinrichtung 11 gemäß der vorliegenden Erfindung.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

**Patentansprüche**

1. Regeleinrichtung zum Positionsregeln einer Hydraulikzylindereinheit (1),

   - wobei die Regeleinrichtung einen Regler (15) aufweist, der eingangsseitig eine Sollstellung (s*) eines Kolbens (3) der Hydraulikzylindereinheit (1) und eine Iststellung (s) des Kolbens (3) entgegen nimmt und anhand der Differenz (δs) von Sollstellung (s*) und Iststellung (s) eine vorläufige Stellgröße (u') für eine Ventilsteuereinheit (7) der Hydraulikzylindereinheit (1) ermittelt,
   - wobei dem Regler (15) eine Linearisierungseinheit (17) nachgeordnet ist, welche die vorläufige Stellgröße (u') mit einem Linearisierungsfaktor (F) multipliziert und die mit dem Linearisierungsfaktor (F) multiplizierte vorläufige Stellgröße (u') als endgültige Stellgröße (u) an die Ventilsteuereinheit (7) ausgibt, so dass der Kolben (3) mit einer Verstellgeschwindigkeit (v) verstellt wird,
   - wobei die Linearisierungseinheit (17) den Linearisierungsfaktor (F) dynamisch als Funktion der Iststellung (s) des Kolbens (3) und beidseitig des Kolbens (3) sowie zufluss-und abflussseitig der Ventilsteuereinheit (7) herrschender Arbeitsdrücke (pA, pB, pP, pT) bestimmt,
   - wobei die Linearisierungseinheit (17) den Linearisierungsfaktor (F) derart bestimmt, dass ein Verhältnis der Verstellgeschwindigkeit (v) zur Differenz (δs) von Sollstellung (s*) und Iststellung (s) unabhängig von der Iststellung (s) des Kolbens (3) und den Arbeitsdrücken (pA, pB, pP, pT) ist.

2. Regeleinrichtung nach Anspruch 1,

**dadurch gekennzeichnet, dass** der Regler (15) als P-Regler ausgebildet ist.

3. Regeleinrichtung zum Positionsregeln einer Hydraulikzylindereinheit (1),

   - wobei die Regeleinrichtung einen als P-Regler ausgebildeten Regler (15) aufweist, der eingangsseitig eine Regelgröße (δs') entgegen nimmt, anhand der Regelgröße (δs') eine Stellgröße (u) für eine Ventilsteuereinheit (7) der Hydraulikzylindereinheit (1) ermittelt und die Stellgröße (u) an die Ventilsteuereinheit (7) ausgibt, so dass der Kolben (3) mit einer Verstellgeschwindigkeit (v) verstellt wird,
   - wobei dem Regler (15) eine Linearisierungseinheit (17) vorgeordnet ist, welche eine Sollstellung (s*) eines Kolbens (3) der Hydraulikzylindereinheit (1) und eine Iststellung (s) des Kolbens (3) entgegen nimmt, deren Differenz (δs) mit einem Linearisierungsfaktor (F) multipliziert und die mit dem Linearisierungsfaktor (F) multiplizierte Differenz (δs) als Regelgröße (δs') an den Regler (15) ausgibt,
   - wobei die Linearisierungseinheit (17) den Linearisierungsfaktor (F) dynamisch als Funktion der Iststellung (s) des Kolbens (3) und beidseitig des Kolbens (3) sowie zufluss-und abflussseitig der Ventilsteuereinheit (7) herrschender Arbeitsdrücke (pA, pB, pP, pT) bestimmt,
   - wobei die Linearisierungseinheit (17) den Linearisierungsfaktor (F) derart bestimmt, dass ein Verhältnis der Verstellgeschwindigkeit (v) zur Differenz (δs) von Sollstellung (s*) und Iststellung (s) des Kolbens (3) unabhängig von der Iststellung (s) des Kolbens (3) und den Arbeitsdrücken (pA, pB, pP, pT) ist.

4. Regeleinrichtung nach Anspruch 1, 2 oder 3,
   **dadurch gekennzeichnet, dass** die Linearisierungseinheit (17) zur Bestimmung des Linearisierungsfaktors (F) als weitere Daten Leistungsdaten (pN, QNA, QNB) der Ventilsteuereinheit (7), beidseitig des Kolbens (3) wirksame Arbeitsflächen (AKA, AKB) und beidseitig des Kolbens (3) minimal mögliche wirksame Volumina (VminA, VminB) heranzieht.

5. Regeleinrichtung nach Anspruch 4,
   **dadurch gekennzeichnet, dass** die Linearisierungseinheit (17) die weiteren Daten zumindest teilweise als Parameter entgegen nimmt.

6. Regeleinrichtung nach Anspruch 4 oder 5,
   **dadurch gekennzeichnet, dass** die Linearisierungseinheit (17) den Linearisierungsfaktor (F) gemäß der Beziehung

$$F = K \cdot \frac{\dfrac{AKA}{hA} + \dfrac{AKB}{hB}}{\sqrt{\dfrac{pP - pA}{pN} \cdot \dfrac{QNA}{hA}} + \sqrt{\dfrac{pB - pT}{pN} \cdot \dfrac{QNB}{hB}}}$$

ermittelt, wobei

   - F der Linearisierungsfaktor ist,
   - K ein frei wählbarer, konstanter Skalierungsfaktor ist,
   - AKA die dem sich vergrößernden Arbeitsvolumen (5A) zugewandte Arbeitsfläche des Kolbens (3) ist,
   - AKB die dem sich verkleinernden Arbeitsvolumen (5B) zugewandte Arbeitsfläche des Kolbens (3) ist,
   - pA der Arbeitsdruck ist, der auf die dem sich vergrößernden Arbeitsvolumen (5A) zugewandte Arbeitsfläche (4A) des Kolbens (3) wirkt,
   - pB der Arbeitsdruck ist, der auf die dem sich verkleinernden Arbeitsvolumen (5B) zugewandte Arbeitsfläche (4B) des Kolbens (3) wirkt,
   - pP der zuflussseitig der Ventilsteuereinheit (7) anstehende Arbeitsdruck ist,
   - pT der abflussseitig der Ventilsteuereinheit (7) anstehende Arbeitsdruck ist,
   - pN ein Nominaldruck der Ventilsteuereinheit (7) ist,
   - QNA ein Nennvolumenstrom ist, der in das sich vergrößernde Arbeitsvolumen (5A) strömt, wenn eine Differenz zwischen dem zuflussseitig der Ventilsteuereinheit (7) anstehenden Arbeitsdruck (pP) und dem im sich vergrößernden Arbeitsvolumen (5A) anstehenden Arbeitsdruck (pA) gleich dem Nominaldruck (pN) ist,
   - QNB ein Nennvolumenstrom ist, der aus dem sich verkleinernden Arbeitsvolumen (5B) strömt, wenn eine Differenz zwischen dem im sich verkleinernden Arbeitsvolumen (5B) anstehenden Arbeitsdruck (pB) und dem abflussseitig der Ventilsteuereinheit (7) anstehenden Arbeitsdruck (pT) gleich dem Nominaldruck (pN) ist,

- hA der Quotient zwischen dem sich vergrößernden Arbeitsvolumen (5A) und der diesem Arbeitsvolumen (5A) zugewandten Arbeitsfläche (4A) ist, wobei das sich vergrößernde Arbeitsvolumen (5A) anhand der Iststellung (s) des Kolbens (3) und des für diese Seite des Kolbens (3) minimal möglichen wirksamen Volumens (VminA) ermittelt wird, und

- hB der Quotient zwischen dem sich verkleinernden Arbeitsvolumen (5B) und der dem sich verkleinernden Arbeitsvolumen (5B) zugewandten Arbeitsfläche (4B) ist, wobei das sich verkleinernde Arbeitsvolumen (5B) anhand der Iststellung (s) des Kolbens (3) und des für diese Seite des Kolbens (3) minimal möglichen wirksamen Volumens (VminB) ermittelt wird.

7. Regeleinrichtung nach einem der obigen Ansprüche, **dadurch gekennzeichnet, dass** sie als softwareprogrammierbare Regeleinrichtung ausgebildet ist und mit einem Softwaremodul (12) programmiert ist, so dass sie aufgrund der Programmierung mit dem Softwaremodul (12) nach einem der obigen Ansprüche ausgebildet ist.

8. Softwaremodul, das Maschinencode (14) umfasst, dessen Abarbeitung durch eine an eine Hydraulikzylindereinheit (1) angebundene softwareprogrammierbare Regeleinrichtung (11) bewirkt, dass die Regeleinrichtung (11) gemäß einem der Ansprüche 1 bis 6 ausgebildet wird.

9. Datenträger, auf dem in maschinenlesbarer Form ein Softwaremodul (12) nach Anspruch 8 gespeichert ist.

10. Verwendung einer mittels einer Regeleinrichtung (11) nach einem der Ansprüche 1 bis 7 geregelten Hydraulikzylindereinheit (1) zur Anstellungsregelung eines Walzgerüsts (20).

## Claims

1. Control device for the position control of a hydraulic cylinder unit (1),

- wherein the control device has a controller (15) which receives, on the input side, a setpoint position (s*) of a piston (3) of the hydraulic cylinder unit (1) and an actual position (s) of the piston (3) and determines a preliminary manipulated variable (u') for a valve control unit (7) of the hydraulic cylinder unit (1) on the basis of the difference (δs) between the setpoint position (s*) and the actual position (s),
- wherein a linearization unit (17) is arranged downstream of the controller (15) and multiplies the preliminary manipulated variable (u') by a linearization factor (F) and outputs the preliminary manipulated variable (u') multiplied by the linearization factor (F), as the final manipulated variable (u) to the valve control unit (7), so that the piston (3) is adjusted at an adjustment speed (v),
- wherein the linearization unit (17) determines the linearization factor (F) dynamically as a function of the actual position (s) of the piston (3), and of working pressures (pA, pB, pP, pT) which prevail on both sides of the piston (3) and on the inflow side and outflow side of the valve control unit (7),
- wherein the linearization unit (17) determines the linearization factor (F) in such a way that a ratio between the adjustment speed (v) and the difference (δs) between the setpoint position (s*) and actual position (s) is independent of the actual position (s) of the piston (3) and of the working pressures (pA, pB, pP, pT).

2. Control device according to Claim 1,
**characterized in that** the controller (15) is embodied as a P controller.

3. Control device for the position control of a hydraulic cylinder unit (1),

- wherein the control device has a controller (15) which is embodied as a P controller and receives, on the input side, a control variable
(δs'), determines a manipulated variable (u) for a valve control unit (7) of the hydraulic cylinder unit (1) on the basis of the control variable (δs'), and outputs the manipulated variable (u) to the valve control unit (7), so that the piston (3) is adjusted at an adjustment speed (v),
- wherein a linearization unit (17) is arranged upstream of the controller (15) and receives a setpoint position (s*) of a piston (3) of the hydraulic cylinder unit (1) and an actual position (s) of the piston (3), multiplies the difference (δs) between said positions by a linearization factor (F), and outputs the difference (δs), multiplied by the linearization factor (F), as a control variable (δs') to the controller (15),
- wherein the linearization unit (17) determines the linearization factor (F) dynamically as a function of the actual

8

position (s) of the piston (3), and of working pressures (pA, pB, pP, pT) prevailing on both sides of the piston (3) and on the inflow side and outflow side of the valve control unit (7),
- wherein the linearization unit (17) determines the linearization factor (F) in such a way that a ratio of the adjustment speed (v) with respect to the difference (δs) between the setpoint position (s*) and actual position (s) of the piston (3) is independent of the actual position (s) of the piston (3) and of the working pressures (pA, pB, pP, pT).

4. Control device according to Claim 1, 2 or 3, **characterized in that** the linearization unit (17) uses, for the determination of the linearization factor (F), power data (pN, QNA, QNB) of the valve unit (7) as further data, working faces (AKA, AKB) which are effective on both sides of the piston (3) and minimum possible effective volumes (VminA, VminB) on both sides of the piston (3).

5. Control device according to Claim 4,
**characterized in that** the linearization unit (17) receives the further data at least partially as parameters.

6. Control device according to Claim 4 or 5,
**characterized in that** the linearization unit (17) determines the linearization factor (F) according to the relationship:

$$F = K \cdot \frac{\dfrac{AKA}{hA} + \dfrac{AKB}{hB}}{\sqrt{\dfrac{pP - pA}{pN} \cdot \dfrac{QNA}{hA}} + \sqrt{\dfrac{pB - pT}{pN} \cdot \dfrac{QNB}{hB}}}$$

wherein

- F is the linearization factor,
- K is a freely selectable, constant scaling factor,
- AKA is the working face of the piston (3) facing the increasing working volume (5A),
- AKB is the working face of the piston (3) facing the decreasing working volume (5B),
- pA is the working pressure acting on the working face (4A) of the piston (3) facing the increasing working volume (5A),
- pB is the working pressure acting on the working face (4B) of the piston (3) facing the decreasing working volume (5A),
- pP is the working pressure present on the inflow side of the valve control unit (7),
- pT is the working pressure present on the outflow side of the valve control unit (7),
- pN is a nominal pressure of the valve control unit (7),
- QNA is a rated volume flow which flows into the increasing working volume (5A) when a difference between the working pressure (pP) present on the inflow side of the valve control unit (7) and the working pressure (pA) present in the increasing working volume (5A) is equal to the nominal pressure (pN),
- QNB is a rated volume flow which flows out of the decreasing working volume (5B) when a difference between the working pressure (pB) present in the decreasing working volume (5B) and the working pressure (pT) present on the outflow side of the valve control unit (7) is equal to the nominal pressure (pN),
- hA is the quotient between the increasing working volume (5A) and the working face (4A) facing this working volume (5A), wherein the increasing working volume (5A) is determined on the basis of the actual position (s) of the piston (3) and the minimum possible effective volume (VminA) for this side of the piston (3), and
- hB is the quotient between the decreasing working volume (5B) and the working face (4B) facing the decreasing working volume (5B), wherein the decreasing working volume (5B) is determined on the basis of the actual position (s) of the piston (3) and the minimum possible effective volume (VminB) for this side of the piston (3).

7. Control device according to one of the above claims, **characterized in that** it is embodied as a control device which can be programmed by means of software and is programmed with a software module (12) so that it is embodied according to one of the above claims on the basis of the programming with the software module (12).

8. Software module which comprises machine code (14) whose processing by means of a control device (11) which can be programmed by means of software and is connected to a hydraulic cylinder unit (1) causes the control device (11) to be embodied according to one of Claims 1 to 6.

9. Data carrier on which a software module (12) according to Claim 8 is stored in a machine-readable form.

10. Use of a hydraulic cylinder unit (1), controlled by means of a control device (11) according to one of Claims 1 to 7 for controlling the positioning of a rolling stand (20).

**Revendications**

1. Dispositif de régulation de la position d'un groupe ( 1 ) vérin hydraulique

   - dans lequel le dispositif de régulation comporte un régulateur ( 15 ) qui reçoit du côté de l'entrée une position ( s* ) de consigne d'un piston ( 3 ) du groupe ( 1 ) vérin hydraulique et une position ( s ) réelle du piston ( 3 ) et qui, au moyen de la différence ( δs ) entre la position ( s* ) de consigne et la position ( s ) réelle, détermine une grandeur ( u' ) provisoire de réglage d'une unité ( 7 ) de commande de vanne du groupe ( 1 ) vérin hydraulique,
   - dans lequel il est monté en aval du régulateur ( 15 ), une unité ( 17 ) de linéarisation qui multiplie la grandeur ( u' ) provisoire de réglage par un facteur ( F ) de linéarisation et qui envoie à l'unité ( 7 ) de commande de vanne la grandeur ( u' ) provisoire de réglage multipliée par le facteur ( F ) de linéarisation, en tant que grandeur ( u ) de réglage finale de sorte que le piston ( 3 ) est déplacé à une vitesse ( v ) de déplacement,
   - dans lequel l'unité ( 17 ) de linéarisation détermine le facteur ( F ) de linéarisation dynamiquement en fonction de la position ( s ) réelle du piston ( 3 ) et en fonction des pressions ( pA, pB,pP, pT ) de travail régnant des deux côtés du piston ( 3 ) ainsi que du côté d'entrée et du côté de sortie de l'unité ( 7 ) de commande de vanne,
   - dans lequel l'unité ( 17 ) de linéarisation détermine le facteur ( F ) de linéarisation de manière à ce qu'un rapport de la vitesse ( v ) de réglage à la différence ( δs ) entre la position ( s* ) de consigne et la position ( s ) réelle soit indépendant de la position ( s ) réelle du piston ( 3 ) et des pressions ( pA, pB, pP, pT ) de travail.

2. Dispositif de régulation suivant la revendication 1, **caractérisé en ce que** le régulateur ( 15 ) est constitué en régulateur P.

3. Dispositif de régulation de la position d'un groupe ( 1 ) vérin hydraulique,

   - dans lequel le dispositif de régulation comporte un régulateur ( 15 ) constitué sous la forme d'un régulateur P qui reçoit du côté de l'entrée une grandeur ( δs' ) de régulation, détermine au moyen de la grandeur ( δs' ) de régulation une grandeur ( u ) réglante pour une unité ( 7 ) de commande de vanne du groupe ( 1 ) vérin hydraulique et envoie la grandeur ( u ) réglante à l'unité ( 7 ) de commande de vanne de manière à déplacer le piston ( 3 ) à une vitesse ( v ) de déplacement,
   - dans lequel il est monté en amont du régulateur ( 15 ) et une unité ( 17 ) de linéarisation qui reçoit une valeur ( s* ) de consigne d'un piston ( 3 ) du groupe ( 1 ) vérin hydraulique et une valeur ( s ) réelle du piston ( 3 ), multiplie leur différence ( δs ) par un facteur ( F ) de linéarisation et envoie au régulateur ( 15 ), comme grandeur ( δs' ) de régulation, la différence ( δs ) multipliée par le facteur ( F ) de linéarisation,
   - dans lequel l'unité ( 17 ) de linéarisation détermine le facteur ( F ) de linéarisation dynamiquement en fonction de la position ( s ) réelle du piston ( 3 ) et en fonction des pressions ( pA, pB,pP, pT ) de travail régnant des deux côtés du piston ( 3 ) ainsi que du côté d'entrée et du côté de sortie de l'unité ( 7 ) de commande de vanne,
   - dans lequel l'unité ( 17 ) de linéarisation détermine le facteur ( F ) de linéarisation de manière à ce qu'un rapport de la vitesse ( v ) de réglage à la différence ( δs ) entre la position ( s* ) de consigne et la position ( s ) réelle soit indépendant de la position ( s ) réelle du piston ( 3 ) et des pressions ( pA, pB,pP, pT ) de travail.

4. Dispositif de régulation suivant la revendication 1, 2 ou 3, **caractérisé en ce que** l'unité ( 17 ) de linéarisation tire parti pour la détermination du facteur ( f ) de linéarisation, comme autres données, de données ( pN, QNA, QNB ) de puissance de l'unité ( 7 ) de commande de vanne, de surfaces ( AKA, AKB ) de travail efficace des deux côtés du piston ( 3 ) et de volumes ( VminA, VminB ) efficaces possibles minimum des deux côtés du piston ( 3 ).

5. Dispositif de régulation suivant la revendication 4, **caractérisé en ce que** l'unité ( 7 ) de linéarisation reçoit les ordres donnés au moins en partie sous forme de paramètre.

6. Dispositif de régulation suivant la revendication 4 ou 5, **caractérisé en ce que** l'unité ( 17 ) de linéarisation détermine le facteur ( F ) de linéarisation suivant la relation

$$F = K \cdot \frac{\dfrac{AKA}{hA} + \dfrac{AKB}{hB}}{\sqrt{\dfrac{pP - pA}{pN} \cdot \dfrac{QNA}{hA}} + \sqrt{\dfrac{pB - pT}{pN} \cdot \dfrac{QNB}{hB}}}$$

dans laquelle,

- F est le facteur de linéarisation,
- K est un facteur d'échelle constant pouvant être choisi d'une manière arbitraire,
- AKA est la surface de travail du piston ( 3 ) tournée vers le volume ( 5A ) de travail qui devient plus grand,
- AKB est la surface de travail du piston ( 3 ) tournée vers le volume ( 5B ) de travail qui devient plus petit,
- pA est la pression de travail qui agit sur la surface ( 4A ) de travail du piston ( 3 ) tournée vers le volume ( 5A ) de travail qui devient plus grand,
- pB est la pression de travail qui agit sur la surface ( 4B ) de travail du piston ( 3 ) tournée vers le volume ( 5B ) de travail qui devient plus petit,
- pP est la pression de travail existante du côté de l'entrée de l'unité ( 7 ) de commande de vanne,
- pT est la pression de travail existante du côté de la sortie de l'unité ( 7 ) de commande de vannes,
- pN est une pression nominale de l'unité ( 7 ) de commande de vanne,
- QNA est un courant en volume nominal qui entre dans le volume ( 5A ) de travail qui devient plus grand lorsqu'une différence entre la pression ( pP ) de travail existante du côté de l'entrée de l'unité ( 7 ) de commande de vanne et la pression ( pA ) de travail existante dans le volume ( 5A ) de travail qui devient plus grand est égale à la pression ( pN ) nominale,
- QNB est un courant en volume nominal qui sort du volume ( 5B ) de travail qui devient plus petit lorsqu'une différence entre la pression ( pB ) de travail existante dans le volume ( 5B ) de travail qui devient plus petit et la pression ( pT ) de travail existante du côté de la sortie de l'unité ( 7 ) de commande de vannes est égale à la pression ( pN ) nominale,
- hA est le quotient entre le volume ( 5A ) de travail qui devient plus grand et la surface ( 4A ) de travail tournée vers ce volume ( 5A ) de travail, le volume ( 5A ) de travail qui devient plus grand étant déterminé au moyen de la position ( s ) réelle du piston ( 3 ) et du volume ( VminA ) efficace possible au minimum pour ce côté du piston ( 3 ) et,
- hB est le quotient entre le volume ( 5B ) de travail qui devient plus petit et la surface ( 4B ) de travail tournée vers le volume ( 5B ) de travail qui devient plus petit, le volume ( 5B ) de travail qui devient plus petit étant déterminé au moyen de la position ( s ) réelle du piston ( 3 ) et du volume ( VminB ) efficace possible au minimum pour ce côté du piston ( 3 ).

7. Dispositif de régulation suivant l'une des revendications précédentes, **caractérisé en ce qu'**il est constitué un dispositif de régulation programmable par logiciel et est programmé par un module ( 12 ) de logiciel de sorte qu'il est constitué sur la base de la programmation par le module ( 12 ) de logiciel suivant l'une des revendications précédentes.

8. Module de logiciel qui comprend un code ( 14 ) machine dont le déroulement par un dispositif ( 11 ) de régulation programmable par le logiciel et relié au groupe ( 1 ) vérin hydraulique fait que le dispositif ( 11 ) de régulation est constitué suivant l'une des revendications 1 à 6.

9. Support de données sur lequel un module ( 12 ) de logiciel suivant la revendication 8 est mémorisé sous une forme pouvant être lue par machine.

10. Utilisation d'un groupe ( 1 ) vérin hydraulique régulé au moyen d'un dispositif ( 11 ) de régulation suivant l'une des revendications 1 à 7 pour la régulation de mise en marche d'une cage ( 20 ) de laminoir.

## FIG 1

## FIG 2

## FIG 3

## FIG 5

## FIG 4

EP 2 206 031 B1

T (T')

s

pA

pB

pP

pT

sign δs

19'

19

F

$$F = \frac{\dfrac{AKA}{hA} + \dfrac{AKB}{hB}}{\sqrt{\dfrac{pP\text{-}pA}{pN}} \cdot \dfrac{QNA}{hA} + \sqrt{\dfrac{pP\text{-}pT}{pN}} \cdot \dfrac{QNB}{hB}} \qquad \text{(für sign } \delta s = +1)$$

$$F = \frac{\dfrac{AKB}{hB} + \dfrac{AKA}{hA}}{\sqrt{\dfrac{pP\text{-}pB}{pN}} \cdot \dfrac{QNB}{hB} + \sqrt{\dfrac{pA\text{-}pT}{pN}} \cdot \dfrac{QNA}{hA}} \qquad \text{(für sign } \delta s = -1)$$

AKA  AKB  VminA  VminB  smin  smax  pN  QNA  QNB

**IN DER BESCHREIBUNG AUFGEFÜHRTE DOKUMENTE**

**In der Beschreibung aufgeführte Patentdokumente**

- EP 0557541 A1